# EUROPEAN PATENT APPLICATION

(11) **EP 1 536 116 A2**
(43) Date of publication of application: **01.06.2005**
(21) Application number: 04425449.8
(22) Date of filing: 18.06.2004
(51) Int. Cl.: F02B 67/00, F02B 73/00, F02B 77/00, F02B 41/10, F02G 5/02

(54) **Full saving - gear to save fuel**

(30) Priority: 28.11.2003 IT BI20030003 U
(71) Applicant: Bianco, Armando, Sandigliano (BI) (IT)
(72) Inventor: Bianco, Armando, Sandigliano (BI) (IT)

(57) **Abstract**

Full Saving mechanical components are used for recovering flue gases produced by the internal-combustion engine. This gear (Full Saving) turns flue gases,thermal energy into mechanical energy generated by the compressed air which is turned by using the Turbocampoumd 2 turbine and by using the variable-speed drive connected to the flywheel engine.The superchargers operating in such aelectronic way and the ones operating with the flue gases recovering by means of the Turbocampound 2 split turbine structure will develop the rotation power and will turn the compressed air power (kinetic force) into the rotation power (mechanical force). If this gear is used for trucks you can take the Full Saving 2 and the Full Saving 3 options into consideration since you can not use these for motorcars owing to their dimensions and costs.

## Description

The Full Saving is composed of mechanical components regenerating the flue gases produced by internal combustion engine. The Full Saving turns the flue gas-thermal energy into mechanical energy generated by the compressed air.

The production of compressed air uses flue gases and compressors which start electrically.

On the basis of the purpose (trucks TAV 1 or motorcars TAV 4) there are some choices concerning further systems in order to increase the production of compressed air (Full Saving 2 - Full Saving 3).The turbine turbocampound 2 (twining turbine) turns kinetic energy into mechanical energy. This turbine is composed of two impellers: one is used for regenerating flue gases (impeller 14), the other uses the compressed air (impeller 13).The impellers transmit ( with their small shafts connected to the impellers in the first section and connected to a gearing with a turn drive "16" in its final section) the rotation power to the flywheel (10) (see legend on page 9 ecc.).In the impeller (14) of the turbine turbocampound 2 are gathered the flue gases coming from the engine (8).The flue gases pass through the impeller (3) of traditional turbine (19) and whenever they get out they pass through the tubing(12) and they get into the turbocampound 2 turbine by activating the impeller (14).Now, the impeller(14) will transmit its rotator movement to the small shaft (17-A) and to the turn drive (16).After having finished their rotator cycle in the impeller (14), the flue gases get out and go into the piping (5-A) where they encounter in the coupling (6) the compressed air which activated the impeller (13).The impeller (13) of the turbocampound 2 turbine is activated by the compressed air coming from the piping (9).The compressed air passes through the duplex distributor (7) controlled by the servo control of the pedal of the accelerator (45) which regulates the flow as needed (limit-switch). After having activated the impeller(13), the compressed air [(13) impeller with a small shaft (17 B) and a gearing combined with the turn drive (16) in the final section, also the turn drive[[[[ is combined with the flywheel motor (10)] gets into the tubing (5) and arrives at the coupling (6) and encounters the flue gases coming from the impeller (14), so they go to the tubing(15) if it needs not producing compressed air, otherwise the transmit will be deviated by the switch valve (24) in the tubing (5B).

The tubing (5B) lets flue gases and compressed air [coming from the coupling (6)] through the impeller (27). The task of this impeller is to activate the compressor(28) producing compressed air that must be sent to the accumulation tanks (25).The transmit of the flue gases and compressed air in the piping (5B and 15) is controlled by a switch valve (24).

By means of a electro-control (2)[which is activated by a pressure switch (37)located on the pressure regulator (23)] the switch valve decides on the tubing where the flue gases and the compressed air must pass.

If the switch valve (24) closes, the passage of the flue gases and the compressed air will be in the tubing (15) (the tubing doesn't feed the impeller 27 in fact this impeller feeds the compressor 28), if not, the switch valve (24) is opened (a request for the production of compressed air)the passage of compressed air and flue gases will be in the tubing (5B). This tubing must feed the impeller (27) and this impeller will activate the compressor (28) supplying with other compressed air the accumulation tanks (25), then the rotation cycle of the impeller can start again (13).

Anyway, the flue gases and the compressed air passing through either the tubing (15) or the tubing (5B) rejoin in the canalizing joint (18), where through the tubing(48) the flue gases and the compressed air (if provided for options) [Full Saving 2 "TAV2", Full Saving 3 "TAV3"] conclude another production cycle of compressed air, if not, they will go to the silencer directly(32).

The compressed air produced by the compressor (28) is sent to the pressure regulator (23) by the tubing (26). On its way the compressed air encounters the joint (42).The task of the joint is to canalize the compressed air coming from the piping (39-26-40-41) sent to the pressure regulator (23).

Then, from the pressure regulator (23) the compressed air reaches the accumulation tank (25) by the tubing (46) where a safety valve (22) assures a working pressure. After having came out of the tank (25) the compressed air reaches the duplex distributor (7) using the tubing (43).

So, the compressed air passes through the tubing (9) and gets out and finally feeds the impeller (13) of the turbocampound turbine.

You can add optional devices: Full Saving 2 and Full Saving 3 (only for trucks), if you want to produce again compressed air. The Full Saving 2 (see table 2) begins working whenever it needs reducing speed or braking, indeed the Full Saving 2 is used as a hydraulic decelerator and also to produce compressed air at the same time.

The system is applicable to trucks and heavy vehicles, which on flat ways, when they must reduce speed, they use the decelerator and in this way they obtain compressed air without wearing and overheating the brakes.Besides decelerating, the Full Saving 2 (see caption on page 14) produces compressed air that must be sent to Full Saving group (components that reduce the fuel consumptions and reduce the air pollution).

The Full Saving 2 is composed of a casing (95), where you can find out a scabbard or a jacket (137) and where there is a rack cylinder (138).This cylinder send the oil to a particular section (named stage 1), where there are a series of fittings distinguishing the type of slowing-down as needed and producing compressed air at the same time that must be sent to full Saving moderating the wear and the overheating of the brakes.
you can get this effect through the rack shaft (138) that pushes the oil from the initial section (from where the oil arrives) to the final one (final section of the first stage).

This decelerating effect is different, according to the circumstances, using electro-valves (102-103-104) with programmed opening (pressure setting), differential setting so as to pass from a stage to another and getting the braking effect wanted.

Indeed, during the stages a resistance pressure forms which reduce the rotation of the rack shaft to the working pressure set out for the slowing-down of the first stage.

Later, the electro-valve (104) opens and the oil can pass through an impeller (99).

This impeller is connected (by means of a speed gearing) to a compressor (100) producing compressed air.

When the oil comes out of the impeller (99), the oil encounters the electro-valve (103).

The oil through a braking sensor will activate the opening of the electro-valve (102) and so doing the oil will flow to the tubing of the return oil (133-135) to accumulation tank (124).

All we have explained above it occurs only if the expected slowing-down is enough, if not, with a great request of deceleration the electro-valve (120) will close.

Then, the oil will pass in the electro-valve (103) and with its opening the oil will pass on the second stage with the same processing of the previous stage (stage 1 A) as you can see above.

However, the slowing effect will do other stages (3-4) to obtain the best braking effect.

The opening electro-valves (102 tubing bringing back the hydraulic oil to the accumulation tank) of slowing-down stages have a sensor as to as to eliminate any problem about working, weight, weather conditions.

This sensor is connected to an anti-blockage station A.B.S. so as to assure a good use of the decelerator even in hard circumstances without running the risk of locking the wheels.

The last contrivance to produce compressed air is the Full Saving 3.

This device turns thermal energy of the flue gases into vapour kinetic energy.

The contrivance feeds one or more compressors and produces compressed air that must be sent to the Full Saving contrivance.

The Full Saving 3 is the last of the optional components recycling the flue gases and turning their heat into compressed air that must be sent to the Full Saving ( to the accumulation tanks 25 exactly, see caption on page 16).The flue gases ran through the piping (48) and pass through the coil (56) (which is formed by several turns of the tube) so as to turn water into vapour.

When the flue gases have finished the turn of the tubing they will go to the silencer (32 Full - Saving).The water of the container (55) is turned into vapour by the compartment (59), the water reaches the container (92) by the tubing (88).

In the container (92) the residual drops of water are separated from the vapour by the separator valve (85) and then the dry saturated vapour can arrive at the impeller (80).

The dry saturated vapour will activate the impeller (80) and will set in motion the compressor (81) generating compressed air. The dry vapour (93) from the container (92) passes through the filter (86) and flows in the piping (84).

Before arriving at the impeller (80) the dry vapour will wait for the opening of the electro-valves (83-78).These electro-valves have the task of deviating the vapour in the tubing (82) without feeding the impeller (80) that activate the compressor (81).This process is controlled by the thrust meter (37) which is placed on the Full Saving pressure regulator (23), and where if an excess of compressed air pressure happens, this regulator will send an electric impulse closing the deviating valves (83-78) which will close the tubing (79) and will deviate the vapour on the tubing (82) carrying out the vapour to the container (75)

If it will need producing compressed air again, the deviating valves (83-78) will close the tubing (78) and will deviate the vapour on the tubing (82) carrying out the vapour to the container (75).

If it will need producing again compressed air the deviating valves (83-78) will open and will close the tubing (82). So doing they will oblige the vapour to pass through the tubing (79) which feeds the impeller (80). The impeller (80) will activate the compressor (81) and then the vapour will go into the container (75).

In the container (75) there is a liquid for cooling the vapour coming from the tubing (79) or from the tubing (82) where there is a fan (74) to cool the liquid (water).The boiling water is sent again from the container (74) to the container (55) using the piping (62) where there is a pump (69) pushing the water into the container (55).The pump is activated by an electric motor (68).Here also it is located a simplex valve (63).If an increase of boiling water volume happens in the container (75) the superabundance will be gathered by the tubing (72) and will pour it in the container (71).This container (which is provided with a pump pushing the water and activated with an electric motor (66)) must re-establish the liquid level of the container (55).The level condition (61) controls the liquid level in the container (55).This level condition by means of an electromechanical control activates the engine (66) feeding the pump (67).The pump takes the liquid from the container (71) and send it to the electrical engine (68) through the tubing (65) so as to take boiling water from the container (75) and send it to the container (55).The level condition (61) actives also the pump (69) by the electric motor (68) so as to take boiling water from the container (75) and send it to the container (55) regenerating the liquid turned into vapour in the container (55). If over-pressures should happen in the container (55), the safety valves (60-58) will exhaust in the atmosphere the vapour in excess so as to regenerate the working pressure. If there is some anomaly the deviating electro-valves (52-53)will begin working. These valves close and deviate the flue gases in the tubing (49), so the flue gases couldn't pass in the coil (56) and avoid the formation of vapour in the container (55) and discharge the flue gases directly in the silencer (32) (Full Saving) without making the formation cycle of the Full Saving 3 compressed air.

### Full Saving caption

1) Container turn drive + turbocampound 2 turbine.
2) Electromechanical device with locking impulse of the switch valve (24) monitored by the thrust meter (37). Its function is to deviate the flow of the flue gases and compressed air from tubing (5) (tubing feeding the impeller 27 and activating the compressor 28) to tubing (15) that must exhaust the flue gases directly into the silencer (32).
3) Traditional turbine impeller working with flue gases outgoing from the engine.
4) Traditional turbine impeller sucking up air so as to supercharger the engine.
5) Tubing containing compressed air coming from the impeller (3.). The tubing extends as far as the coupling (6) and joins up the tubing (5A).The tubing (5A) contains the flue gases coming from the impeller (14) deviated by the switch valve (24) in the tubing (5B) or (15) if it needs activating or not the impeller (27).This impeller must activate the compressor (28).
   a) The tubing contains the flue gases coming from the impeller (14). When the flue gases arrive at coupling (6) they cross the tubing (5) (this tubing contains compressed air coming from the impeller (13). The flue gases are deviated by the switch vale (24), this switch valve monitors the course of the flue gases ( or compressed air) either in the tubing (5 B "tubing activating the impeller 27 of the compressor 28") or in the tubing ( 15 " tubing that doesn't active the impeller 27 of the compressor 28).
   b) secondary tubing recuperating the flue gases and the compressed air deviated either in the tubing (15) or in the tubing (5 B).
6) coupling connecting tubing (5) ( tubing containing compressed air) and (5 B) ( tubing containing flue gases).
7) duplex distributor, electromechanical device[regulated by the speed limit-switch (45)] regulating the transmit of the compressed air from tubing (43) to tubing (9).
8) flue gas collector.
9) the compressed air coming from the duplex distributor (7) pass through this tubing to the impeller (13), (turbocampound2 turbine impeller converting the rotation power into motion power by means of the small shaft of the turn drive (16).
10) flywheel engine shaft
11) collector of the traditional turbine impeller (3).
12) tubing recuperating flue gases from the impeller (3) to the impeller (4).
13) turbocampound 2 turbine impeller activated by the compressed air coming form the tubing (9) and passing through the duplex distributor (7) .....
14) impeller of the turbocampound 2 turbine fed with flue gases coming from the tubing (12) which are provided by the impeller (3) and generated by the engine combustion.
15) secondary piping recuperating the flue gases and the compressed air deviated by the switch valve (24) so as not to feed the pump impeller (27) that activates the compressor (28).
16) turn drive.
17) turbocampound turbine
18) canalizing joint of the flue gases and compressed air.
19) traditional turbine.
20) Full Saving 3 (optional).
21) compressor of compressed air placed to the driving shaft.
22) safety valve
23) pressure regulator including the thrust meter (37) to switch off the feeding of the electric current of the engine (36) (34) and servo-control (2) closing/opening switch valve (24).
24) Switch valve deviating the compressed air and flue gas flow from the tubing (5 B) to the tubing (15)
25) Compressed air accumulation tanks.
26) Piping containing compressed air that must be sent to the pressure regulator (23).
27) Pump impellers activating the compressors (28) ....
28) Compressed air compressors.
29) Pressure regulator for braking plant recuperating the air in excess sent to the pressure regulator (23)
30) Braking element
31) Compressed air tanks for braking elements.
32) Silencer
33) Compressor activated electronically n° 1
34) Electric motor n° 1
35) Compressor activated electronically n° 2
36) Electric motor n° 2
37) Thrust meter switching off the electric feeding of the electric motors (34 36) and monitoring the electric gearing (2) closing/opening switch valve (24) when the it reaches the maximum working pressure in the tanks (25).
3 8) Piping containing compressed air produced by the Full Saving 2.
39) Piping containing compressed air produced by the Full Saving 3.
40) Piping containing compressed air produced by the compressor (33)
41)Piping containing compressed air in excess turned out from the regulator (29) and sets out for the regulator (23).
42)joint canalizing the compressed air coming from the conduits (39-26-40-41) sent to the pressure regulator
43) Piping containing compressed air sets out for duplex distributor (7) that will regulate the passage of the compressed air that must be sent to impeller (13), impeller of the turbine (17).
44) Tubing containing compressed air sent to the regulator (29) used for the braking plant.
45) Speed control group ( servomotor, limit-switch... )
46) Tubing where the compressed air passes from the regulator (23) to the compressed air accumulation tanks (25).
47) Joint forming into a group the piping (38-46-48) set out for the pressure regulator (23).
48) Tubing containing compressed air and flue gases sent to the silencer (32)directly

### Full Saving motorcar caption

1) Container turn drive + turbocampound 2 turbine.
2) Electromechanical device with locking impulse of the switch valve (24) monitored by the thrust meter (37). Its function is to deviate the flow of the flue gases and compressed air from tubing (5) (tubing feeding the impeller 27 and activating the compressor 28) to tubing (15) that must exhaust the flue gases directly into the silencer (32).
3) Traditional turbine impeller working with flue gases outgoing from the engine.
4) Traditional turbine impeller sucking up air so as to supercharger the engine.
5) Tubing containing compressed air coming from the impeller (3.). The tubing extends as far as the coupling (6) and joins up the tubing (5A).The tubing (5A) contains the flue gases coming from the impeller (14) deviated by the switch valve (24) in the tubing (5B) or (15) if it needs activating or not the impeller (27).This impeller must activate the compressor (28).
   C) The tubing contains the flue gases coming from the impeller (14). When the flue gases arrive at coupling (6) they cross the tubing (5) (this tubing contains compressed air coming from the impeller (13). The flue gases are deviated by the switch vale (24), this switch valve monitors the course of the flue gases ( or compressed air) either in the tubing (5 B "tubing activating the impeller 27 of the compressor 28") or in the tubing ( 15 " tubing that doesn't active the impeller 27 of the compressor 28).
   D) secondary tubing recuperating the flue gases and the compressed air deviated either in the tubing (15) or in the tubing (5 B).
6) coupling connecting tubing (5) ( tubing containing compressed air) and (5 B) ( tubing containing flue gases).
7) Duplex distributor, electro-pneumatic device[regulated by the speed limit-switch (45)] regulating the transmit of the compressed air from tubing (43) to tubing (9).
8)Flue gas collector.
9)The compressed air coming from the duplex distributor (7) passes through this tubing to the impeller (13), ( turbocampound2 turbine impeller converting the rotation power into motion power by means of the small shaft of the turn drive (16).
10) Flywheel engine shaft
11)Collector of the traditional turbine impeller (3).
12)Tubing recuperating flue gases from the impeller (3) to the impeller (4).
13)Turbocampound 2 turbine impeller activated by the compressed air coming form the tubing (9) and passing through the duplex distributor (7)..... 14)Impeller of the turbocampound 2 turbine fed with flue gases coming from the tubing
(12) which are provided by the impeller (3) and generated by the engine combustion.
15)Secondary piping recuperating the flue gases and the compressed air deviated by the switch valve (24) so as not to feed the pump impeller (27) that activates the compressor (28).
16)Turn drive.
17)Turbocampound turbine
18)Canalizing joint of the flue gases and compressed air.
19)Traditional turbine.
20)Pump impeller activating the compressor (21).
21)Compressor of compressed air.
22)Safety valve
23)Pressure regulator including the thrust meter (37) to switch off the feeding of the electric current of the engine (36) (34) and servo-control (2) closing-opening switch valve (24).
24) Switch valve deviating the compressed air and flue gas flow from the tubing (5 B) to the tubing (15)
25) Compressed air accumulation tanks.
26) Piping containing compressed air that must be sent to the pressure regulator (23).
27) Pump impellers activating the compressors (28)....
28) Compressed air compressor
29) Piping containing compressed air sets out for the duplex distributor (7) which will regulate the flow of compressed air that must be sent to the impeller (13).
30) Piping containing compressed air that must be sent to the pressure regulator(23)
31) Collector containing the flue gases activating the impeller (3) and the impeller (14)
32) Silencer
33) Compressor activated electronically n° 1
34) Electric motor n° 1
35) Compressor activated electronically n° 2
36) Scheme showing the transformation of the kinetic energy into mechanical energy.
   The kinetic energy gets through the recycling of the flue gases (impeller 14) and using the compressed air (impeller 13).
   The kinetic energy is transmitted to turn drive (16) through the two small shafts of the turbine turbocampound 2 (17) which uses two impellers.
   The impeller 14 for recycling the flue gases and impeller 13 using the compressed air.
   The mechanical energy (rotation) is transmitted from the turn drive (16) to the flywheel motor.
37) Thrust meter switching off the electric feeding of the electric motors (34 36) and monitoring the electric gearing (2) closing/opening switch valve (24) when it reaches the maximum working pressure in the tanks (25).
38) Tubing containing compressed air and flue gases came out of the tubing (18) and sent to the silencer (32).

### Full Saving 2 caption

95) Full Saving 2 containment casing.
96) Piping containing compressed air.
97) Speed impeller gearing.
98) Speed compressor gearing.
99) Hydraulic oil impeller pump (stage 1 A).
100) Compressor of compressed air (stage 1 A).
101) Piping compressed air intake
102) Electro-valve (stage 1 A), for the return of hydraulic oil to the accumulation tank (29), closed.
103) Electro-valve for the crossing of the following slowing-down stages (2-A, 3-A, 4-A,.....)
104) Electro-valve feeding the oil pump impeller (5) (stage 1 A) opened.
105) Hydraulic oil pump impeller (stage 2 A)
106) Compressor of compressed air (stage 2 A).
107) Electro-valve (stage 2 A) for the return hydraulic oil to the accumulation tank (29) closed.
108) Electro-valve for the crossing of the following slowing-down stages (3 A, 4 A, ....) opened.
109) Electro-valve for feeding oil pump impeller (11) (stage 2 A) opened.
140) Hydraulic oil pump impeller (stage 3 A).
141) Compressor of compressed air (stage 3 A).
110) Electro-valve (stage 3 A) for the return hydraulic oil to the accumulation tank (29) opened.
111) Electro-valve for feeding oil pump impeller (16) (stage 3 A) opened.
112) Electro-valve for the crossing following slowing-down stages (4 A,...) closed.
113) Hydraulic oil pump impeller (stage 4).
114) Compressor of compressed air (stage 4).
115) Electro-valve (stage 4A) for the return hydraulic oil to the accumulation tank (29) closed.
116) Electro-valve for crossing the following slowing-down stages ( the last) closed.
117) Electro-valve for feeding oil pump impeller (21) (stage 4) closed.
118) Central driving shaft without rack.
119) Carding joint
120) Rotary joints to separate the oil of the rack shaft from a stage to another.
124) Hydraulic oil tank.
123) Hydraulic oil.
125) Slowing-down stage of 4^{th} degree with the process of slowing-down and production of compressed air.
122) Electro-valves with opening for return of hydraulic oil to the accumulation tank (29) with simplex closure of the oil.
121) Electro-valve with closure/opening of the hydraulic oil flow in a simplex way towards the accumulation tank (29).
132) Plug accumulation hydraulic oil (29).
133) Piping for the return hydraulic oil to the accumulation tank (29).
134) Valve with opening/closure delivery hydraulic oil to the first and the following slowing-down stages.
135) Piping return hydraulic oil.
136) Piping going hydraulic oil
137) Jacket or casing containing the hydraulic oil and the rack shaft.
138) Rack cylinder or screw to push the oil towards the final side in all slowing-down stages the oil will pass to the following stage or to the accumulation tank.
139) Cooling fan of the hydraulic oil

### Full Saving 3 caption

50) Tube containing flue gases coming from the piping (49-56).
54) Water turning into vapour.
55) Coil tube containing flue gases turning water into vapour.
48) Flue gas tube coming from the full saving joint (18) to the re-heating coil (56).
60) Safety valve calibrated with working pressure.
59) Accumulation vapour chamber
58) Operating valve with opening/closure in the atmosphere.
57) Tube for the steam condensate.
90) Simplex valve.
91) Steam condensate.
89) Simplex valve.
88) Piping dry saturated vapour.
87) Pressure reducer.
93) Dry vapour.
85) Separator.
86) Strainer
84) Piping vapour to activate the pump impeller (80) of the compressor (81)
83) Switch valve 1.
81) Compressor of compressed air.
82) Switch piping containing the vapour that mustn't feed the impeller (80)
80) Compressor pump impeller.
79) Piping getting out vapour from the pump impeller (80)
78) Switch valve 2.
77) Simplex valve.
75) Vapour cooling container through a liquid
74) Cooling fan.
73) Liquid cooling the vapour
72) Piping to exhaust the cooling liquid in excess
71) Tank of reserve and regenerating the liquid to the container (55)
70) Reserve liquid
66) Electric motor 1 to activate water pump (67)
67) Water pump to regenerate the container liquid level (55)
68) Water pump to send to the container (55) the condensate of the cooled vapour turned into liquid
65) Piping sending the liquid to the container (55)
62) Piping carrying out cooled water/vapour from the container (75) to the container (75)
63) Simplex valve
69) Electric motor 2 to feed the pump (69)
64) Simplex valve
51) Electric coil to heat water in the containers and in the piping in winter
56) Water container to form vapour
94) Safety valve
75) Safety valve
61) Level condition
92) Container to separate the aqueous particles from the vapour.
52) Switch valve 1 flue gas.
53) Switch valve 2 flue gases
49) Tubing that mustn't feed the coil (3) turning water into vapour.

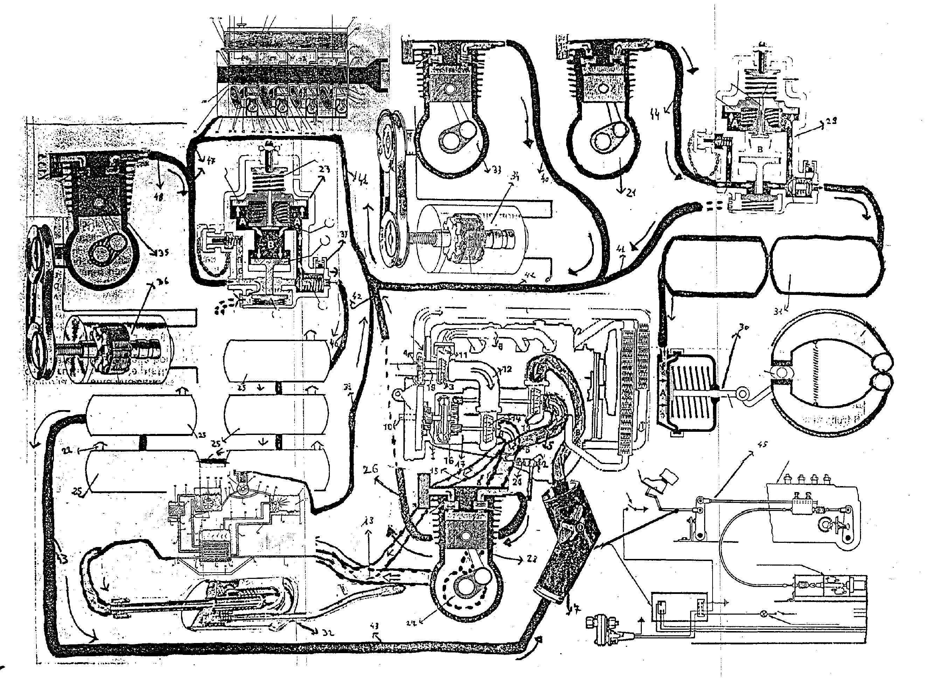

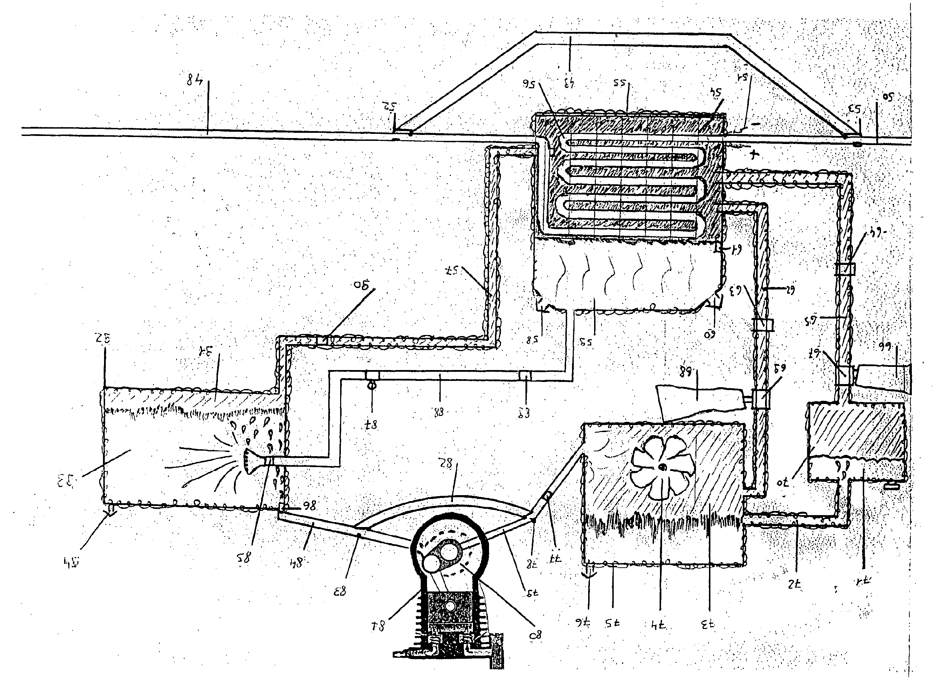

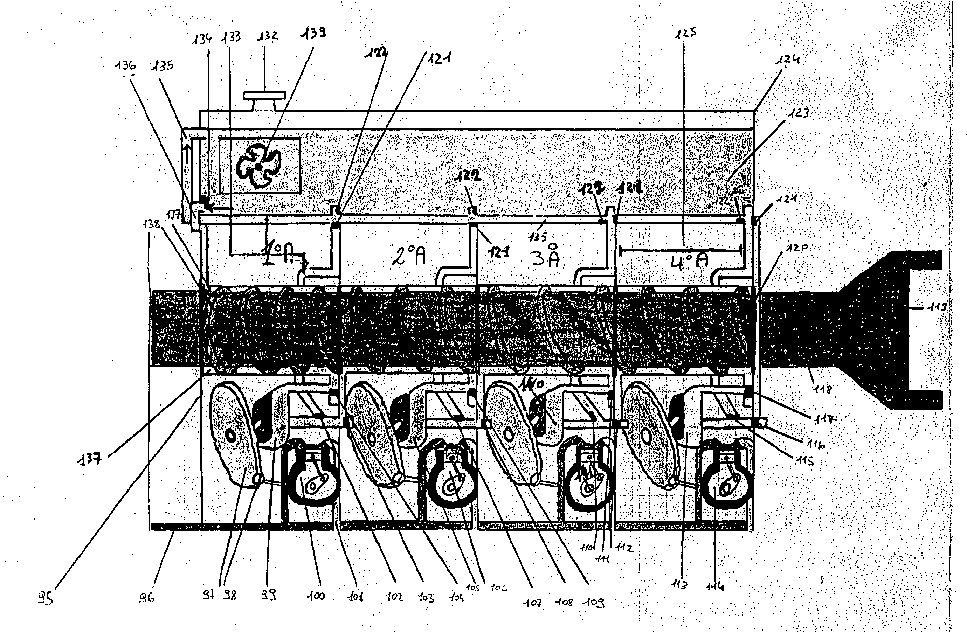

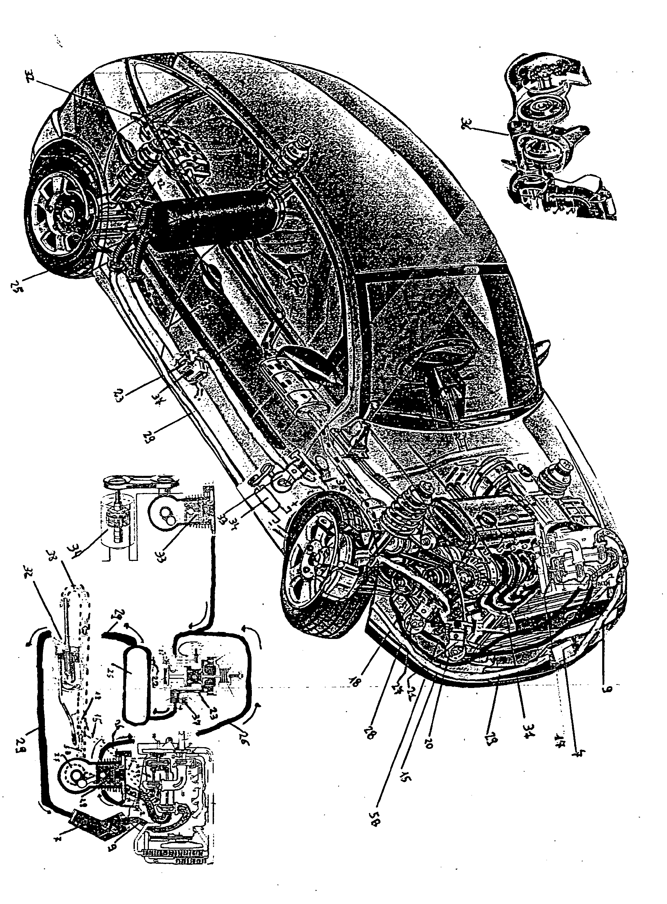

## Claims

1. The Full Saving is composed of mechanical components turning thermal energy (regeneration of the flue gases ) into mechanical energy (tav. 1-4) (producing compressed air transmitted to the flywheel engine by means of turn drive).
The Full Saving uses the turbine turbocampound 2 for regeneration and production compressed air (I invented this turbine).
This turbine is composed of two impellere, two small shafts and two gearings.
They are located on the final section and they are placed on the gearing of the turn drive.
The flue gases produced by the combustion of engine pass through the impeller (14), while the compressed air produced by the components of the Full Saving pass through the impeller (13).
The small shafts carry out their rotation power from the impeliers (13-14) to the turn drive increasing the performances and reducing the consumptions.
The Full Saving 2 and Full Saving 3 optional contrivances increase the production of compressed air in the heavy vehicles (trucks).
The Full Saving two (see tav 2 ) is used for two reasons; and this contrivance is used for reducing or braking the motor vehicle and produce compressed air that must be sent to the Full Saving contrivance.
She second optional contrivance (Full Saving 3) increases the production ofcompressed air. I invented this contrivance to produce compressed air regenerating the heat of the flue gases (see tav. 3) and turning the flue gases into vapour.
Then, they can be used for activating the compressors and producing compressed air.
